# EUROPEAN PATENT APPLICATION

(11) **EP 4 163 904 A1**
(43) Date of publication of application: **12.04.2023**
(21) Application number: 21382910.4
(22) Date of filing: 11.10.2021
(51) Int. Cl.: G09B 23/30, G09B 23/32, G09B 23/28, A61B 5/00, B25J 9/00

(54) **ANATOMICAL MODEL FOR MEASURING THE INTERACTION OF AN EXOSKELETON WITH A BIOLOGICAL LIMB ASSISTED BY SAID EXOSKELETON**

(71) Applicant: Consejo Superior De Investigaciones Científicas, 28006 Madrid (ES); Institute Jozef Stefan, 1000 Ljubljana (SI); Vrije Universiteit Brussel, 1050 Brussel (BE)
(72) Inventor: TORRICELLI, Diego, 28006 Madrid (ES); MASSARDI, Stefano, 28006 Madrid (ES); PINTO FERNÁNDEZ, David, 28006 Madrid (ES); GÓMEZ LARRÉN, Estela, 28006 Madrid (ES); BABIC, Jan, 1000 Ljubljana (SI); DEZMAN, Miha, 1000 Ljubljana (SI); TROST, Andrej, 1000 Ljubljana (SI); GROSU, Victor, 1050 Bruxelles (BE); LEFEBER, Dirk, 1050 Bruxelles (BE); RODRÍGUEZ GUERRERO, Carlos, 1050 Bruxelles (BE)
(74) Representative: ABG Intellectual Property Law, S.L.

(57) **Abstract**

The present invention is related to an anatomical model for measuring the interaction of an exoskeleton with a biological limb assisted by said exoskeleton. The present invention is characterized by a special structure of the device formed by an inner structure comprising a first structural element and a second structural element. The first structural element and a second structural element are joined by means of a first joint, preferably with rotation capability. Likewise, the device comprises a first casing and a second casing, each of the casings covering the first structural element and a second structural element respectively. The device is further characterized in that each of the shells is divided into a plurality of segments and, each segment is attached to the internal structure by means of a sensor that allows to provide a signal representing the loads that the exoskeleton exerts on the region corresponding to that segment.

## Description

### FIELD OF THE INVENTION

The present invention is related to an anatomical model for measuring the interaction of an exoskeleton with a biological limb assisted by said exoskeleton.

The present invention is characterized by a special structure of the device formed by a an inner structure comprising a first structural element and a second structural element. The first structural element and a second structural element are joined by means of a first joint, preferably with rotation capability.

Likewise, the device comprises a first casing and a second casing, each of the casings covering the first structural element and a second structural element respectively.

The device is further characterized in that each of the shells is divided into a plurality of segments and, each segment is attached to the internal structure by means of a sensor that allows to provide a signal representing the loads that the exoskeleton exerts on the region corresponding to that segment.

### PRIOR ART

One of the technical fields with a more intensive development is in the design of exoskeletons. An exoskeleton is understood as that mobile machine consisting mainly of an external frame and which is attachable to a person or part of it.

This exoskeleton can be equipped with a power system and actuators that provide part of the energy needed by the person to carry out some kind of movement.

An example of an exoskeleton is one that is attached to the leg in people with difficulties in moving the knee and help the extension and contraction movements of the knee allowing the person to walk.

The same can occur in exoskeletons that help people with arm problems and who cannot articulate the elbow properly for example because they do not have enough strength or have neurological problems that cause difficulty in the movement of the arm.

Among the frequent cases of patients who need an exoskeleton are the elderly or those disabled to walk on their own.

Exoskeletons are structures that should assist the patient's movement by exerting force in coordination with the patient's desired movement. For this purpose, the exoskeleton incorporates a plurality of biometric sensors that for example detect the nerve signals that the brain sends to the muscles of the limbs when the movement is to be started, for example when walking is to be started. Upon these signals, a processing unit of the exoskeleton responds to the signals causing it to act with a minimum response time by activating the corresponding actuators.

In any of the cases of exoskeletons, it is very important that the shape of the exoskeleton, the actual degrees of freedom it has and the way it interacts with the patient does not cause harm to the patient.

The most frequent harm is the excess of pressure on some pressure point of the exoskeleton on the patient's skin. To test that the exoskeleton is suitable for the patient, according to the state of the art, is to fix the patient in a suitable position, attach the exoskeleton to the patient and test the movement under controlled conditions. In this way the interaction of the exoskeleton with the patient is observed.

The disadvantage of this approach is that, if the interaction is not adequate, the patient may be harmed if the test is not stopped in time. Even if the damage is not important and the test can be stopped in time, it is always a nuisance.

The present invention solves the problems previously identified by means of an anatomical model adapted to receive and assist an exoskeleton in such a way that it is capable of providing signals responsive to the interaction that a user would perceive but without the detriment of possible damage that the patient would otherwise have.

### DESCRIPTION OF THE INVENTION

The present invention is an anatomical model, in particular a dummy body part, for measuring the interaction of an exoskeleton (2) with a biological limb assisted by said exoskeleton (2).

Examples of patient limbs as the most relevant that can be assisted by an exoskeleton are one or two legs, one or two arms.

The anatomical model comprises:
- *an inner structure comprising at least a first structural element and a second structural element connected by means of a first joint, the inner structure intended for reproducing the resistant structure of the limb;*
- *a first casing at least partially covering the first structural element;*
- *a second casing at least partially covering the second structural element;*
- *the first casing and the second casing simulating an outer surface of the limb of the anatomical model.*

The inner structure of the anatomical model is the structural part of the device; that is, all the loads applied from the all loads exerted by the exoskeleton are received by the inner structure. According to specific embodiments, the anatomical model also comprises actuators capable of providing it with movement. In this case the inner structure not only receives loads coming from the interaction with the exoskeleton but is also able to generate additional forces through the movement caused by such actuators.

The inner structure is also the one that establishes the movement that the patient's limb would perform ensuring that the interaction between the anatomical model and the exoskeleton is the same as it would be between the patient's limb and the exoskeleton.

The inner structure comprises the first structural element and the second structural element connected by a joint. The joint corresponds to the joint that the patient has in the limb represented by the anatomical model. This joint can simplify the actual movements of the patient's joint. For example, if the limb is a leg and the joint is the knee, the kinematics of the real knee rotation is very complex but can be simplified by a joint with rotation along a pivot axis.

The inner structure in this same example of realization would perform the function of the bones of the patient's limb, in this case the bones of the leg.

The first structural element and the second structural element are covered by a first casing and a second casing respectively. The function of this shell is to reproduce the surface of the limb with the most approximate possible shape so that the interaction between the anatomical model and the exoskeleton corresponds to the interaction that the patient's limb would have given its specific shape and also its specific dimensions.

The shape of the first casing and the second casing need not necessarily extend over an area that is equal to the entire area of the patient's limb. This is the case in the knee where an exoskeleton does not usually have support at any point on the knee. It is sufficient that the area covered by either casing has an area equal to the area that interacts with the exoskeleton attachments to the patient's limb.

The anatomical model is further characterized in that:
*the first casing, the second casing or both casings are divided into a plurality of segments;*
- *each segment is fixed to the inner structure by means of a sensor adapted to provide a signal responsive to the forces acting on the segment;*
- *an interface connected to each of the sensors adapted to provide the plurality of signals from the sensors.*

A patient's limb consists of a continuous surface over which there are distributed nerve endings through which the patient senses external actions such as pressure or friction.

In contrast, the anatomical model comprises a plurality of segments such that each segment is fixed to the inner structure by means of a sensor. The sensor is adapted to provide a signal in response to the force or forces acting on the segment with respect to the inner structure which is the one on which all the forces received by the plurality of segments are ultimately transmitted.

That is, the contact between any of the parts of the exoskeleton and a segment occurs on the outer surface of the segment that reproduces the anatomical shape of a certain area. In that contact the exoskeleton transmits force to the segment and the segment in turn transmits this force to the inner structure to which it is fixed by means of the sensor.

The sensor is adapted to measure the force transmitted from the segment to the inner structure by generating a signal proportional to one or more components of that force.

According to an embodiment the sensor measures the force normal to the surface of the associated segment.

According to another embodiment, the sensor is adapted to provide a signal with a value equal to the modulus of the force regardless of its direction.

According to another embodiment, the sensor is multi-axis and is capable of providing several signals, each signal proportional to a component of the force according to a preset direction. An specific example of this embodiment is a triaxial sensor capable of measuring the force exerted on the segment in three space directions.

The anatomical model comprises an interface connected to each of the strain sensors adapted to provide the plurality of signal from the sensors.

Sensors are preferably strain sensors.

According to an embodiment, *first casing, the second casing or both casings are covered by a laminar coating of elastomeric material forming a single surface.*

The use of a laminar coating on the first casing, the second casing or both allows the shape of the patient's limb to be reproduced more accurately on the surface of the anatomical model. This result does not have an aesthetic purpose, but rather the loads impinging on a segment are partially transmitted to a surrounding region as is the case in the patient's limb since the limb is covered with skin and flesh which shows a continuous and elastic medium behavior. That is, the loads that a given segment receives and that are measured in the sensor located between the segment and the inner structure are more reliable, and the propagation of part of the load to surrounding or nearby segments is also reproduced.

According to another embodiment, *the laminar coating comprises a plurality of pressure sensors adapted to measure a pressure distribution on the laminar coating.*

The measurements provided by the sensors are enriched with the measurements of the plurality of pressure sensors.

A distribution of loads exerted on a given segment results in a resultant force that is measured by the sensor located between the segment and the inner structure. This is an integration process that loses information, the information about how the load is distributed on a corresponding area of the patient's limb corresponding to the area of the segment.

The use of a plurality of pressure sensors on the laminar coating makes it possible to obtain information about the load distribution over an area. The same force measured on a sensor may respond to a point load of the exoskeleton on the patient's limb and that load may be unacceptable but, properly distributed over a sufficient area may be acceptable because it does not inflict damage even though the resultant force on the same sensor is the same.

According to another embodiment, *the anatomical model further comprises a body having the shape of a trunk or a portion of a trunk, adapted to be the support of an exoskeleton attachment other than the limb attachments, said body connected to the first structural element by means of a second joint and wherein the body is linked to a fixed support.*

An exoskeleton is entirely attached to a patient such that the force of any of its actuators drives the movement of one structural element of the exoskeleton relative to another structural element. Both structural elements are attached to the patient. When the exoskeleton includes an aid to the movement of the patient's limb relative to the patient's trunk, the anatomical model requires assessing this interaction with the trunk as well.

According to an example embodiment, the exoskeleton is adapted to be attached to the trunk of the patient and assist in the movement of one leg or both legs. According to this exemplary embodiment, the anatomical model comprises a body having the shape of a trunk and receiving the attachment to the corresponding part of the exoskeleton. The other part of the exoskeleton extends over the segments covering the inner structure formed by the first structural element and the second structural element connected by the first joint. With this more specific configuration of the anatomical model and according to another embodiment it is possible to measure the forces acting on the trunk; however, it is more important that the set of loads exerted by the exoskeleton, now attached to the trunk part, on the part of the anatomical model that reproduces the patient's limb are measured in conditions closer to those established when the exoskeleton is attached to the patient in conditions of use.

According to another embodiment, *the anatomical model further comprises an actuator adapted to move the elements connected by means of the first joint.*

In this embodiment the anatomical model is not passive and the actuator causes forces at least on the first structural element and the second structural element reproducing forces generated by the muscles of the patient when causing the movement of the exoskeleton.

This embodiment is suitable for those patients in whom there is a minimum movement capacity sufficient to be measured by sensors of the exoskeleton and to activate its actuators by assisting in the same movement.

According to another embodiments *the limb is an arm or, the limb is a leg.*

A second aspect of the invention is a workbench comprising
- a fixed support and a testing part, the fixed support being able to support said testing part;
- attachment means connecting the fixed support to the said testing part being held by the fixed support;
wherein the testing part is the anatomical model according to any of the previously disclosed embodiments and the fixed support is able to support such a testing part in a natural human static or dynamic posture.

The dynamic conditions under which an exoskeleton interacts with the body of the patient wearing the exoskeleton depend on the patient's posture, position, the action of gravity, etc. It is only when these conditions are reproduced that the measurements that can be obtained in the anatomical model respond to the forces and interactions between the exoskeleton and the patient's body when wearing the exoskeleton.

According to this aspect of the invention the anatomical model is attached to a fixed support allowing to maintain the anatomical model in a natural human static or dynamic posture. In this position, the anatomical model is a testing part interacting with an exoskeleton assisting said testing part as it would occur if the testing part would be the limb of the patient.

A third aspect of the invention is a method for measuring the interaction of an exoskeleton with a biological limb assisted by said exoskeleton, the method comprising the steps:
*a) providing an anatomical model according to any of the previously disclosed embodiments;*
*b) providing an exoskeleton to be measured, the exoskeleton comprising attachments adapted to be attached to a limb of a user and optionally attachments to a trunk of the user;*
*c) fixing the exoskeleton to be measured to the anatomical model by attaching the set of attachments on the first casing and the second casing of the anatomical model at locations in correspondence with the locations where the exoskeleton is attached to the user;*
*d) providing a computer system adapted to receive a set of signals for processing the interaction between the exoskeleton and a user, connected to the interface of the anatomical model.*

According to this method, the anatomical model plays the role of the patient's limb to test the interaction between the limb and the exoskeleton.

The attachment of the exoskeleton to the anatomical model is done in the closest conditions with respect to how it would be attached to the patient's limb and; in case of having a body representing the patient's body, this attachment would also be carried out.

Each of the joints between the exoskeleton and the patient's limb is where the interaction and the forces that can generate damage such as excessive pressure or friction occur; hence it is required that the joints with the anatomical model must be made to the first casing and the second casing in the positions that correspond to the attachment that is established in the patient's limb. This ensures the fidelity of the data measured on the anatomical model.

The last stage of the method corresponds to the acquisition of measurements by a computational system adapted to receive a set of signals to process the interaction between the exoskeleton and a user where the measurements are received through an interface arranged on the anatomical model.

The processing of the signals provided by the set of sensor of the anatomical model, according to an embodiment, is carried out subsequent to a first acquisition phase. That is, during a time of experimentation, according to an embodiment movements are caused in the anatomical model either by acting from the outside or through actuators arranged on the anatomical model in such a way as to cause different conditions in which there is an interaction between the exoskeleton and the anatomical model. In these different conditions the sensors measure the forces they receive through the interaction with the segments of the anatomical model and provide the signals they generate.

Through a communication interface between the sensors and the computational system this set of signals are registered by said computational system. According to an example embodiment the set of signals is stored to be processed according to one or more criteria in a subsequent post-processing step.

A forth aspect of the invention is the use of an exoskeleton attachment means around an anatomical model portion according to any of the previously disclosed embodiments.

An embodiment of this forth aspect of the invention is a use of an exoskeleton wherein the attachment means surround the first casing and the second casing.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure shows a first embodiment of an anatomical model connected to a computer system adapted to receive a plurality of signals generated from the anatomical model when said anatomical model is testing an exoskeleton no represented in this figure.
- Figure 2: This figure shows a schematic representation of the interaction between the segments, the inner structure and a coating over the segments comprising pressure sensors.
- Figure 3: This figure depicts an embodiment of the anatomical model of a limb with no laminar coating on it.
- Figure 4: This figure shows a workbench intended for carrying out a method for measuring the interaction of an exoskeleton with a biological limb assisted by said exoskeleton.

### DETAILED DESCRIPTION OF THE INVENTION

As will be appreciated by one skilled in the art, aspects of the present invention may be embodied as an anatomical model, a workbench comprising the anatomical model, a method for measuring the interaction of an exoskeleton (2) with a biological limb assisted by the exoskeleton (2) and, the use of the anatomical model.

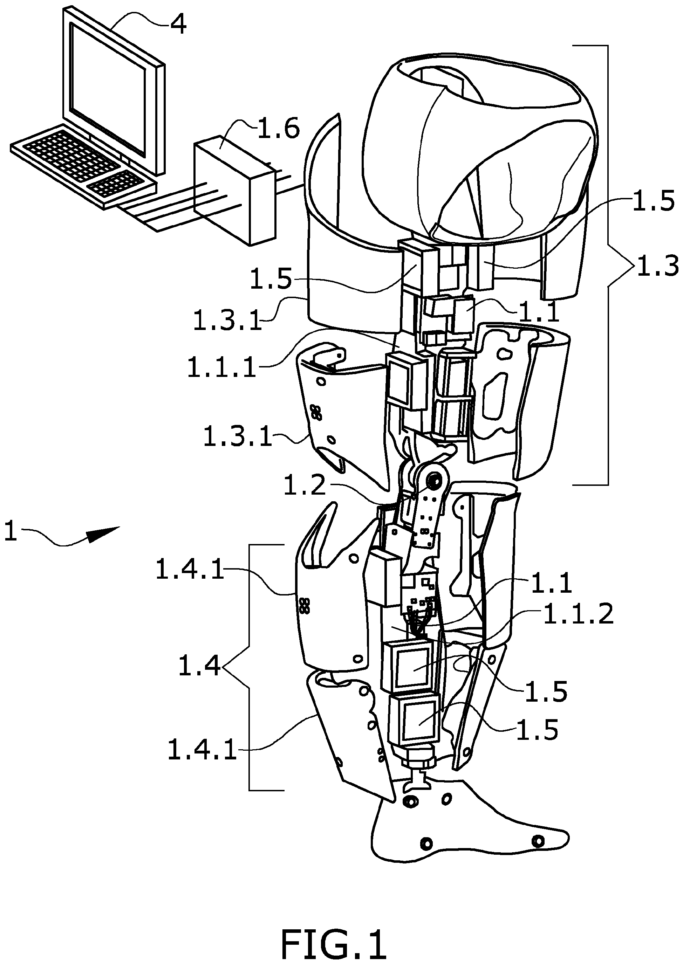

Figure 1 shows an embodiment of an anatomical model (1), in particular a dummy body part corresponding to a leg.

The anatomical model (1) according to this embodiment comprises an inner structure (1.1) configured by means of a structural body with an elongated shape configured by means of plates or one or more bars. In this particular case the structural body is made of interconnected die-cut metal plates since they allow an easy manner of providing a shape and receiving devices by attaching complements in previously drilled holes.

The inner structure (1.1) comprises a first structural element (1.1.1) located in the upper part representing the function of a femur and, a second structural element (1.1.2) located in the lower part representing the function of the combination of tibia and fibula. The first structural element (1.1.1) and the second structural element (1.1.2) are connected by means of a first joint (1.2) that is embodied as an articulated joint that provides the joint with a rotation capacity.

The first structural element (1.1.1) is surrounded by a plurality of segments (1.3.1) resulting in a first casing (1.3) located around said first structural element (1.1.1) and, the second structural element (1.1.2) is also surrounded by a plurality of segments (1.4.1) resulting in a second casing (1.4) located around said second structural element (1.1.2).

Each segment (1.3.1, 1.4.1) of the first and second casing (1.3, 1.4) is connected with the inner structure (1.1) by means of at least a sensor (1.5). In this specific case the sensors (1.5) are strain gauges that are attached to a structural connector, not shown, connecting the corresponding segment (1.3.1, 1.4.1) and the inner structure (1.1). The stress state of the structural connector is measured by the strain gauge providing a signal in response to the forces acting on the segment.

In this specific case the set of sensors (1.5) are passive sensors, specifically strain gauges, wherein the signal provided by the sensors (1.5) is obtained when said sensors (1.5) are fed through an interface (1.6).

According to another embodiment, the sensors (1.5) are active and have a power supply to provide the signal resulting from the measurement of the forces acting on the corresponding segment.

The plurality of signals generated by the sensors (1.5) are collected through an interface (1.6) and processed by a central processing unit (4) graphically represented in Figure 1 by a computer.

According to an embodiment, each of the sensors (1.5) carries out a force measurement at least according to the direction corresponding to the direction of the connector extending from the inner structure (1.1) to the corresponding segment (1.3.1, 1.4.1).

From this set of forces and knowing the directions of action on each of the segments it is possible to establish the set of forces exerted by the exoskeleton (2) to the anatomical model (1) according to the direction perpendicular to the surface of the corresponding casing (1.3, 1.4) inferring therefore forces exerted on the patient's limb.

According to another example of realization, the sensors (1.5) are devices adapted to measure the force in three directions being able to reconstruct the direction of the force acting on each segment (1.3.1, 1.4.1). A specific mode of realization includes two additional strain gauges on the connector giving rise to measurements of two directions tangential to the first direction, the one from the segment (1.3.1, 1.4.1) to the inner structure (1.1) and, perpendicular to each other.

According to these embodiments wherein sensors (1.5) are adapted to measure the normal components and tangential components of the forces exerted to the segments (1.3.1, 1.4.1) allows to determine both the force normal to the patient's limb and the forces that generate friction on the patient's skin.

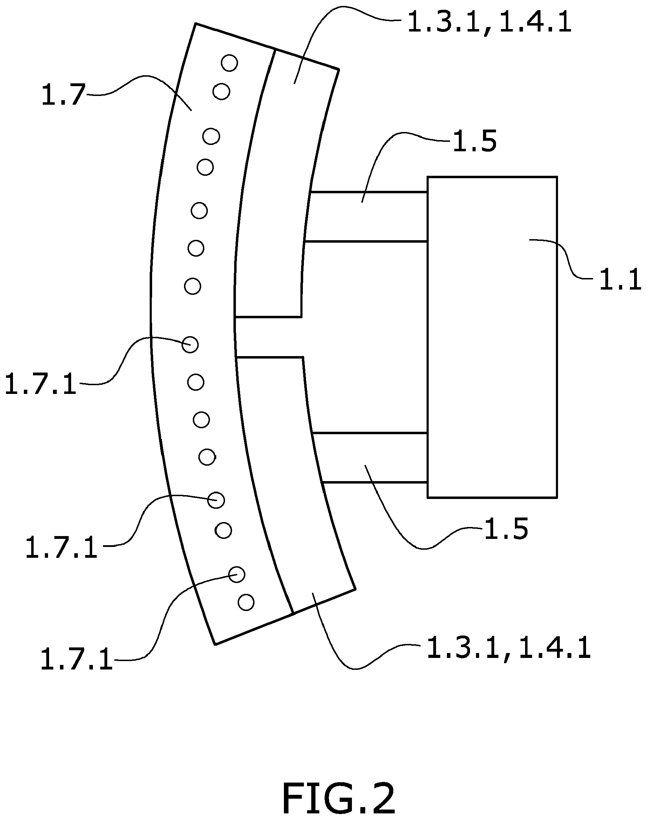

Figure 2 shows a specific example of realization where the anatomical model (1) has a laminar coating (1.7) of elastomeric material.

The application of a force on the surface of the laminar coating (1.7) causes this force to be distributed around the surface of the segments behind the laminar coating (1.7), modifying the distribution of forces reaching one or more segments (1.3.1, 1.4.1) which are under the influence of the applied force.

The effect of this laminar coating (1.7) is to provide a set of measurements on the sensors that is more realistic than that obtained when the exoskeleton (2) exerts interaction with the anatomical model directly on the segments (1.3.1, 1.4.1).

The elastomeric material of the laminar coating (1.7) allows the deformations caused by the exoskeleton (2) on the laminar coating (1.7) to be recovered as soon as it stops exerting force on it due to its behavior as an elastically deformable material.

According to a further embodiment, as it is shown in figure 2, the laminar coating (1.7) comprises a plurality of pressure sensors (1.7.1) adapted to measure a pressure distribution on the laminar coating.

Although a given force resulting from the interaction between a part of the exoskeleton (2) and a given segment (1.3.1, 1.4.1) only acts on a localized region within the area of a segment (1.3.1, 1.4.1) it can be exerted in different ways resulting in the same force measurement through the sensor (1.5) corresponding to that segment (1.3.1, 1.4.1).

The pressure sensors (1.7.1) located in the laminar coating (1.7) provide important additional information for assessing the degree of damage that the exoskeleton (2) can exert on the patient's limb.

The force measured by a sensor (1.5) is the result of the integration of the pressure distribution caused by the interaction between the exoskeleton (2) and the segment (1.3.1, 1.4.1), this time through the laminar coating (1.7). The measurement of the pressure field through the plurality of pressure sensors (1.7.1) resulting from this interaction provides very relevant information since the same resultant force can be produced by a very high pressure in a region of reduced area or, by a low but extended pressure in a region of larger area. Since the damage depends on the pressure exerted on the patient's skin, it is more accurate to have this value when measured by pressure sensors (1.7.1).

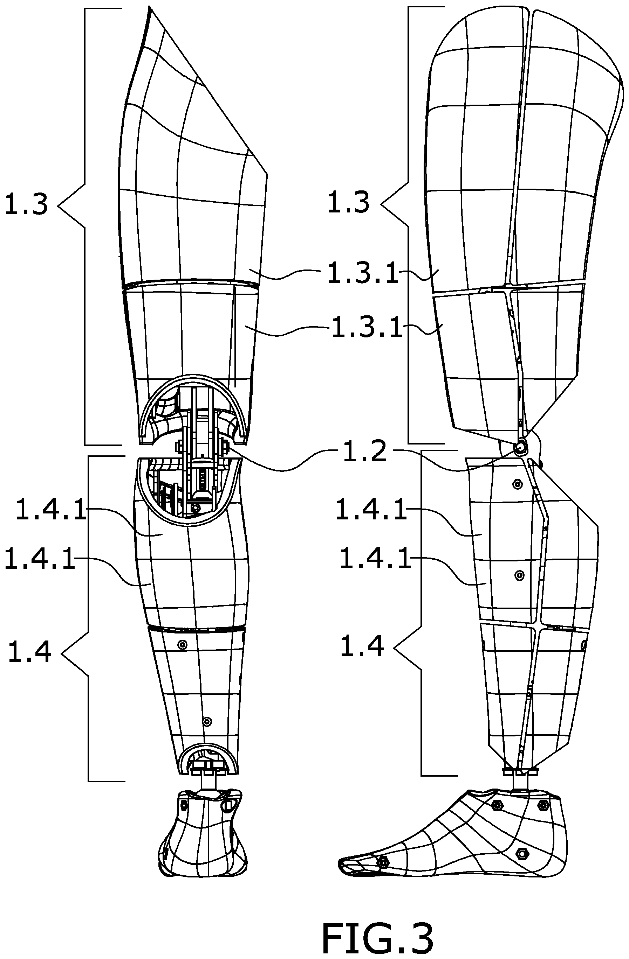

Figure 3 shows an example embodiment where the patient's limb is a leg. The figure shows the first casing (1.3) and the second casing (1.4) formed by segments (1.3.1, 1.4.1) where the segments form a quasi-continuous surface representing the shape of a given patient's leg. It is said "quasi" because between segments (1.3.1, 1.4.1) there is a small gap that allows independent measurements between segments (1.3.1, 1.4.1).

According to another embodiment, the anatomical model (1) comprises a body (1.8) having the shape of a trunk or a portion of a trunk, adapted to be the support of an exoskeleton attachment (2.1) other than limb attachments (2.2) adapted to attach the limb of the patient, said body (1.8) connected to the first structural element (1.1.1) by means of a second joint (1.9) and wherein the body (1.8) is linked to a fixed support (3).

The second joint (1.9) allows at least one degree of freedom, a rotation, although it can adopt a greater number of degrees of freedom. When the anatomical model (1) is a leg, the second joint (1.9) represents a hip joint. If the anatomical model (1) is an arm, the second joint (1.9) represents a shoulder joint.

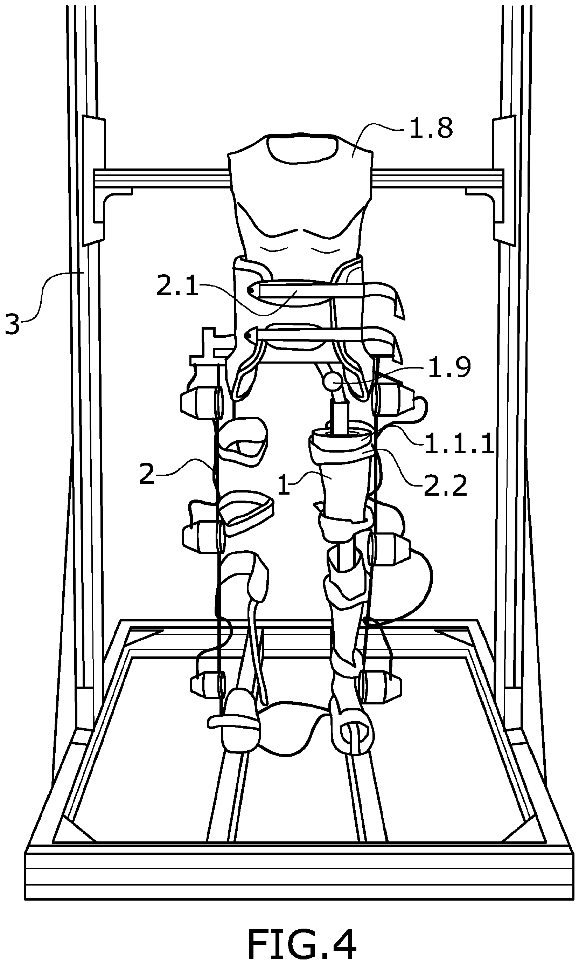

Figure 4 shows an embodiment of a workbench configured by means of a fixed support (3) adapted to support the body (1.8) of the anatomical model (1). This fixation allows the position or even the movement of the anatomical model (1) in the position of the represented part of the biological limb and according to the operative conditions.

Figure 4 depicts the fixed support (3) fixing the body (1.8) of the anatomical model (1) so that the trunk-shaped body is held upright and, the leg portion of the anatomical model (1) in the walking position. In this position, the exoskeleton (2) fits the anatomical model (1) through the limb attachments (2.2) to the leg and through the exoskeleton attachments (2.1) to the body (1.8) in the same conditions as it would do on the patient, to the leg and to the trunk respectively, in the conditions of use.

## Claims

1. An anatomical model (1), in particular a dummy body part, for measuring the interaction of an exoskeleton (2) with a biological limb assisted by said exoskeleton (2), comprising:
- an inner structure (1.1) comprising at least a first structural element (1.1.1) and a second structural element (1.1.2) connected by means of a first joint (1.2), the inner structure (1.1) intended for reproducing the resistant structure of the limb;
- a first casing (1.3) at least partially covering the first structural element (1.1.1);
- a second casing (1.4) at least partially covering the second structural element (1.1.2);
- the first casing (1.3) and the second casing (1,4) simulating an outer surface of the limb of the anatomical model;
**characterized in that**
the first casing (1,3), the second casing (1.4) or both casings (1.3, 1.4) are divided into a plurality of segments (1.3.1, 1.4.1);
- each segment (1.3.1, 1.4.1) is fixed to the inner structure (1,1) by means of a sensor (1.5) adapted to provide a signal responsive to the forces acting on the segment;
- an interface (1.6) connected to each of the sensors (1.5) adapted to provide the plurality of signals from the sensors (1.5).

2. An anatomical model (1) according to claim 1, wherein first casing (1.3), the second casing (1.4) or both casings (1.3, 1.4) are covered by a laminar coating (1.7) of elastomeric material forming a single surface.

3. An anatomical model (1) according to claim 2, wherein the laminar coating comprises a plurality of pressure sensors (1.7.1) adapted to measure a pressure distribution on the laminar coating.

4. An anatomical model (1) according to any of previous claims further comprising a body (1.8) having the shape of a trunk or a portion of a trunk, adapted to be the support of an exoskeleton attachment (2.1) other than the limb attachments (2.2), said body (1.8) connected to the first structural element (1.1.1) by means of a second joint (1.9) and wherein the body (1.8) is linked to a fixed support (3).

5. An anatomical model (1) according to any of previous claims further comprising an actuator adapted to move the elements connected by means of the first joint (1.2).

6. An anatomical model (1) according to any of previous claims, wherein the limb is an arm.

7. An anatomical model (1) according to any of claims 1 to 5, wherein the limb is a leg.

8. Workbench comprising
- a fixed support (3) and a testing part, the fixed support (3) being able to support said testing part;
- attachment means connecting the fixed support (3) to the said testing part being held by the fixed support (3);
**characterized in that**
the testing part is the anatomical model according to one of claims 1 to 7 and the fixed support (3) is able to support such a testing part in a natural human static or dynamic posture.

9. A method for measuring the interaction of an exoskeleton (2) with a biological limb assisted by said exoskeleton (2), the method comprising:
e) providing an anatomical model (1) according to any of claims 1 to 8;
f) providing an exoskeleton (2) to be measured, the exoskeleton (2) comprising attachments (2.2) adapted to be attached to a limb of a user and optionally attachments (2.1) to a trunk of the user;
g) fixing the exoskeleton (2) to be measured to the anatomical model (1) by attaching the set of attachments (2.2) on the first casing (1,3) and the second casing (1.4) of the anatomical model (1) at locations in correspondence with the locations where the exoskeleton is attached to the user;
h) providing a computer system (4) adapted to receive a set of signals for processing the interaction between the exoskeleton (2) and a user, connected to the interface (1.6) of the anatomical model (1).

10. A method according to claim 8, wherein after step c), the movement of the anatomical model (1) and the attached exoskeleton (2) is caused while measuring a set of signals generated by the anatomical model (1).

11. Use of an exoskeleton (2) attachment means around an anatomical model portion according to any of claims 1 to 7.

12. Use of an exoskeleton (2) according to claim 11, wherein the attachment means surround the first casing (1.3) and the second casing (1.4).
